# EUROPÄISCHE PATENTSCHRIFT

(11) **EP 3 582 032 B1**
(45) Veröffentlichungstag und Bekanntmachung des Hinweises auf die Patenterteilung: **06.07.2022**
(21) Anmeldenummer: 18177292.2
(22) Anmeldetag: 12.06.2018
(51) Int. Cl.: G05B 19/042

(54) **FELDGERÄT MIT REDUZIERTER STILLSTANDSZEIT BEI FIRMWARE-UPDATE**
FIELD DEVICE WITH REDUCED DOWNTIME DURING FIRMWARE UPDATE
DISPOSITIF DE TERRAIN À TEMPS D'ARRÊT RÉDUIT LORS DE LA MISE À JOUR DU MICROLOGICIEL

(43) Veröffentlichungstag der Anmeldung: 18.12.2019
(73) Patentinhaber: VEGA Grieshaber KG, 77709 Wolfach (DE)
(72) Erfinder: ISENMANN, Andreas, 77716 Haslach im Kinzigtal (DE)
(74) Vertreter: Maiwald Patent- und Rechtsanwaltsgesellschaft mbH

(56) Entgegenhaltungen:
- EP-A1- 1 108 984
- WO-A1-2006/125404
- DE-A1-102007 026 602
- DE-A1-102012 112 842
- DE-A1-102014 117 905
- JP-A- 2007 058 394
- US-A1- 2005 097 194
- US-A1- 2016 306 622
- US-A1- 2017 257 782
- US-A1- 2018 004 700
- US-B1- 6 930 785

## Beschreibung

Die Offenbarung betrifft Feldgeräte zur Messung und/oder Steuerung mindestens einer Prozessgröße in einem industriellen Produktionsprozess, Netzwerkgeräte zur Ansteuerung derartiger Feldgeräte sowie ein Verfahren zum Betreiben.

### Stand der Technik

Viele industrielle Produktionsprozesse werden mit Hilfe von Feldgeräten, die Prozessgrößen messen und/oder steuern, geführt. Dabei ist der Fortgang des Prozesses häufig in einem Maße vom fortwährenden Funktionieren der Feldgeräte abhängig, dass ein auch nur zeitweiser Ausfall nicht toleriert werden kann, sondern einen Stillstand des Prozesses erforderlich macht.

Abgesehen von technischen Defekten sind Updates der Firmware auf den Feldgeräten eine wichtige Quelle für derartige Ausfälle. Wird beispielsweise eine neue Firmware sukzessive über eine Kommunikationsschnittstelle eingelesen und jeweils sofort in den Programmspeicher des Feldgeräts übertragen, so kann das Feldgerät vom Beginn des Einlesens bis zum Neustart mit der aktualisierten Firmware seine Funktion nicht ausüben.

Aus der EP 1 108 984 A1 sowie aus der US 9,736,021 B2 sind Feldgeräte bekannt, die ihre Funktion während des Zeitraums, in dem die Aktualisierung eingelesen wird, weiter ausüben können. Es kommt lediglich zu einer kurzen Ausfallzeit, wenn von der Nutzung der alten Firmware auf die Nutzung der neuen Firmware umgeschaltet wird.

Die US 2005/097 194 A1 offenbart ein Verfahren zum Einspielen einer aktualisierten Firmwareversion auf ein Feldgerät, bei dem der zeitaufwändige Download über ein Netzwerk zeitlich vom Updatevorgang entkoppelt ist. Auf diese Weise wird die durch das Update verursachte Ausfallzeit vermindert.

Die US 2018/004700 A1 offenbart ein weiteres Verfahren zum Einspielen einer aktualisierten Firmwareversion auf ein Feldgerät. Es ist vorgesehen, die neue Firmware über eine serielle Schnittstelle von einem externen Datenträger einzulesen und später wirksam werden zu lassen.

### Aufgabe und Lösung

Es ist Aufgabe der vorliegenden Erfindung, Ausfallzeiten industrieller Produktionsprozesse durch Firmware-Updates von Feldgeräten weiter zu reduzieren. Diese Aufgabe wird erfindungsgemäß gelöst durch ein Feldgerät gemäß Hauptanspruch, sowie einem Computerprogramm gemäß Anspruch 5.

Weitere vorteilhafte Ausgestaltungen ergeben sich aus den darauf rückbezogenen Unteransprüchen.

### Offenbarung der Erfindung

Die Erfindung wird durch den Gegenstand der Patentansprüche definiert. Ausgestaltungen, die im Folgenden präsentiert werden, ohne unter die Ansprüche zu fallen, dienen dazu, den beanspruchten Gegenstand weiter zu illustrieren und dessen Verständnis zu erleichtern.

Im Rahmen der Erfindung wurde ein Feldgerät zur Messung mindestens einer Prozessgröße in einem industriellen Produktionsprozess entwickelt. Dieses Feldgerät umfasst mindestens einen Sensor zur Messung der Prozessgröße.

Weiterhin umfasst das Feldgerät mindestens eine primäre Kommunikationsschnittstelle, die zur Übermittlung von Messwerten des Sensors, ausgebildet ist. Beispielsweise kann die primäre Kommunikationsschnittstelle zur Verbindung mit einem Feldbus-System ausgebildet sein, mit dem der Produktionsprozess als Ganzes gesteuert wird.

Das Feldgerät umfasst mindestens einen Mikrocontroller oder ein Embedded-System zur Steuerung der Messwertaufnahme mit dem Sensor, auf der Basis einer in einem Programmspeicher hinterlegten Firmware. Zusätzlich ist ein weiterer Speicher für eine aktualisierte Version der Firmware, und/oder eine Aufnahme für einen solchen Speicher, vorgesehen. Beispielsweise kann der weitere Speicher ein Datenträger sein, der in eine entsprechende Aufnahme des Feldgeräts eingelegt wird.

Es ist weiterhin eine Aktualisierungslogik vorgesehen, die dazu ausgebildet ist, nach Aufnahme der aktualisierten Version der Firmware in den weiteren Speicher und nach späterem Eintreten mindestens einer vom Verwender des Feldgeräts festgelegten Aktivierungsbedingung den Mikrocontroller, bzw. das Embedded-System, zur Verwendung der aktualisierten Version der Firmware zu veranlassen.

Der Begriff der "aktualisierten Version" ist nicht dahingehend einschränkend zu verstehen, dass er nur den Wechsel von einer älteren Version zu einer vom gleichen Hersteller stammenden neueren Version (Update, Upgrade) umfasst. Vielmehr umfasst dieser Begriff auch den umgekehrten Wechsel von einer neueren Version zu einer älteren Version (Downgrade), der beispielsweise notwendig werden kann, wenn eine neuere Version Probleme verursacht. Ebenso ist beispielsweise auch das Crossgrade zu einer alternativen Firmware als Wechsel zu einer aktualisierten Version anzusehen. Der Begriff umfasst also grundsätzlich jeden Wechsel von einer derzeit genutzten zu einer künftig zu nutzenden Firmware. "Aktualisierte Version" wurde der Übersichtlichkeit halber gewählt, weil das Update oder Upgrade der mit Abstand am häufigsten vorkommende Fall ist.

Es wurde erkannt, dass der Fortgang vieler Produktionsprozesse vom gleichzeitigen Funktionieren einer großen Anzahl von Feldgeräten abhängt. Ein Stillstand tritt also immer dann auf, wenn mindestens ein Feldgerät auf Grund eines Firmware-Updates gerade nicht funktionsfähig ist. Es macht dann keinen Unterschied, ob daneben noch weitere oder gar alle Feldgeräte nicht funktionsfähig sind.

In dieser Situation ermöglicht die Aktualisierungslogik, die Umstellung auf die aktualisierte Version der Firmware in einer Anlage mit einer Vielzahl vorhandener Feldgeräte zu koordinieren, so dass beispielsweise alle Feldgeräte gleichzeitig auf die aktualisierte Version wechseln. Die Ausfallzeit des Produktionsprozesses als Ganzes wird somit minimiert, indem die Aktualisierung, die zum kurzzeitigen Ausfall führt, vom Einlesen der aktualisierten Version in den weiteren Speicher, das noch nicht zwangsläufig zum Ausfall führt, entkoppelt ist.

Der Vorteil ist tendenziell um so größer, je größer die Anzahl der vorhandenen Feldgeräte ist. Eine aktualisierte Firmware kann in einer großen Anlage meistens nicht zeitgleich an alle vorhandenen Feldgeräte übertragen werden, da dies die vorhandene Netzwerkbandbreite überfordern würde. Wenn aber die Feldgeräte, oder Gruppen von Feldgeräten, nacheinander ihre jeweilige aktualisierte Firmware in den weiteren Speicher einlesen und dann sofort wirksam werden lassen, dann gibt es einen vergleichsweise langen Zeitraum, in dem in unregelmäßigen Abständen mindestens ein Feldgerät gerade kurzzeitig nicht verfügbar ist. Die Unterbrechungen liegen jeweils so nahe beieinander, dass die Zeit zwischen zwei Unterbrechungen nicht produktiv genutzt werden kann. Indem das Wirksamwerden der aktualisierten Firmware nun von ihrem Einlesen in den weiteren Speicher entkoppelt ist, kann unabhängig davon, wann und auf welchem Wege ein jedes Feldgerät mit der aktualisierten Firmware versorgt wird, der nicht produktiv nutzbare Zeitraum auf ein Minimum komprimiert werden.

In einer nicht beanspruchten Ausgestaltung ist die Aktivierungslogik dazu ausgebildet, den Empfang eines Freigabesignals über eine Kommunikationsschnittstelle als Aktivierungsbedingung zu prüfen. Hierfür kann beispielsweise die primäre Kommunikationsschnittstelle des Feldgeräts genutzt werden. Dies ist jedoch nicht zwingend. Es kann sogar eine Kommunikationsschnittstelle genutzt werden, die gar nicht zur Anbindung an ein Netzwerk vorgesehen ist. Beispielsweise kann das Freigabesignal von einem mobilen Bediengerät, etwa einem Smartphone, über Near-Field Communication (NFC) oder einen andere kurzreichweitige Funktechnik gegeben werden. Das Freigabesignal kann beispielsweise auch mit einem Taster oder anderen manuellen Bedienelement gegeben werden. Ebenso kann das Freigabesignal über eine längerreichweitige Funktechnik, etwa Betriebsfunk im VHF- oder UHF-Band, zeitgleich an viele Feldgeräte in einem größeren Areal gegeben werden. Die Kopplung der letztendlichen Aktualisierung an das Freigabesignal ermöglicht es dem Verwender der Feldgeräte, den unvermeidlichen kurzen Stillstand des Produktionsprozesses exakt vorauszuplanen und entsprechende Vorkehrungen zu treffen. Wenn die Aktualisierung beispielsweise nicht sicherheitskritisch ist und es auf den genauen Zeitpunkt ihres Wirksamwerdens nicht ankommt, dann kann sie beispielsweise auf einen Zeitpunkt verlegt werden, zu dem der Prozess ohnehin stillsteht.

In einer weiteren nicht beanspruchten Ausgestaltung ist die Aktivierungslogik dazu ausgebildet, das Erreichen eines vorgegebenen Zeitpunkts als Aktivierungsbedingung zu prüfen. Auf diese Weise kann eine große Anzahl Feldgeräte dazu veranlasst werden, gleichzeitig die jeweils aktualisierte Version ihrer Firmware zu verwenden, ohne dass es hierfür notwendig wäre, alle diese Feldgeräte gleichzeitig mit einem Signal zu erreichen.

Erfindungsgemäß ist die Aktualisierungslogik dazu ausgebildet, eine vom Messwert des Sensors abhängige Bedingung als Aktivierungsbedingung zu prüfen. Beispielsweise kann auf diese Weise eine Betriebssituation, in der es auf das Funktionieren des Feldgeräts kurzzeitig nicht ankommt, automatisch erkannt und dann die aktualisierte Version der Firmware aktiviert werden. So kann beispielsweise ein Füllstand, ein Durchfluss oder ein Druck von Null jeweils anzeigen, dass der Prozess gerade stillsteht und durch den kurzzeitigen Ausfall des Feldgeräts kein weiterer Stillstand erzeugt wird.

In einer weiteren nicht beanspruchten Ausgestaltung ist das Feldgerät dazu ausgebildet, die Aktivierungsbedingung aus der aktualisierten Version der Firmware zu ermitteln und der Aktualisierungslogik zur Verfügung zu stellen. Auf diese Weise kann beispielsweise eine Uhrzeit, zu der das Feldgerät eine aktualisierte Firmware aktivieren soll, gleich mit dieser aktualisierten Firmware mitgeliefert werden.

In einer besonders vorteilhaften Ausgestaltung ist das Feldgerät dazu ausgebildet, die aktualisierte Version der Firmware über eine Kommunikationsschnittstelle, die von der primären Kommunikationsschnittstelle verschieden ist, in den weiteren Speicher einzulesen. Dies kann beispielsweise sinnvoll sein, um sicherzustellen, dass die zeitkritische Kommunikation von Steuerbefehlen und Messwerten über die primäre Kommunikationsschnittstelle nicht verlangsamt wird. Dafür kann dann die Übertragung der aktualisierten Firmware zu dem Feldgerät längere Zeit in Anspruch nehmen. Dies gilt insbesondere in einer weiteren besonders vorteilhaften Ausgestaltung, in der die Kommunikationsschnittstelle zum Empfang der Firmware eine geringere Übertragungsgeschwindigkeit aufweist als die primäre Kommunikationsschnittstelle. Wird beispielsweise eine Bluetooth Low Energy-Schnittstelle verwendet, so kann die Übertragung einer 2 MB großen Firmware etwa 3 Stunden in Anspruch nehmen. Dies ist nun nicht mehr von Nachteil, da der Zeitpunkt, zu dem die aktualisierte Firmware aktiviert wird, sich frei wählen lässt.

Vorteilhaft ist das Feldgerät als Füllstandmessgerät, Grenzstandmessgerät, Dichtemessgerät, Durchflussmessgerät oder Druckmessgerät ausgeführt. Diese Feldgeräte gehören zu denjenigen Feldgeräten, auf deren kontinuierliches Funktionieren es für den Fortgang eines Produktionsprozesses am häufigsten ankommt.

Zum Management der Firmware-Updates kann beispielsweise ein Netzwerkgerät verwendet werden, das als Gateway zu einem "Industrial Internet of Things" dient und in dieser Funktion primär Informationen aus Feldgeräten weiterleitet. Ein solches Netzwerkgerät ist jedoch nicht Teil der beanspruchten Erfindung.

Dieses Netzwerkgerät umfasst eine erste Kommunikationsschnittstelle zum Abruf von Informationen aus mindestens einem Feldgerät der zuvor beschriebenen Bauart. Das Netzwerkgerät umfasst weiterhin eine zweite Kommunikationsschnittstelle zur Übermittlung der Informationen über ein Netzwerk an eine Erfassungsstelle. Das Netzwerk kann insbesondere den Zugang zum Internet ermöglichen.

Das Netzwerkgerät umfasst nun zusätzlich eine Rollout-Logik, welche dazu ausgebildet ist, aktualisierte Firmware über das Netzwerk zu beziehen und über die erste Kommunikationsschnittstelle an das oder die Feldgeräte zu übertragen. Beispielsweise kann das Netzwerkgerät regelmäßig prüfen, ob eine aktualisierte Version der Firmware zur Verfügung steht, und diese dann bei der nächsten Gelegenheit an die entsprechenden Feldgeräte verteilen. Der Betreiber hat es dann immer noch vollständig in der Hand, wann dieses Update wirksam wird.

Besonders vorteilhaft ist die Rollout-Logik zusätzlich dazu ausgebildet, mindestens eine aktivierende Bedingung, und/oder mindestens ein Freigabesignal, an das oder die Feldgeräte zu übermitteln. Dann kann das Netzwerkgerät nicht nur zur Vorbereitung der Aktualisierung genutzt werden, sondern auch zu ihrer tatsächlichen Auslösung.

Besonders vorteilhaft ist die Rollout-Logik zusätzlich dazu ausgebildet, über das Netzwerk Informationen bezüglich der aktivierenden Bedingung, und/oder bezüglich des Freigabesignals, an die Rollout-Logik mindestens eines weiteren Netzwerkgeräts zu übermitteln. Auf diese Weise kann die gleichzeitige Aktualisierung vieler Feldgeräte auch dann koordiniert werden, wenn diese nicht alle von einem einzigen Netzwerkgerät aus erreichbar sind. Beispielsweise hat eine Funkschnittstelle nur eine begrenzte Funkreichweite, und die Ausdehnung der Produktionsanlage kann deutlich größer sein als diese Funkreichweite.

Vorteilhaft ist die erste Kommunikationsschnittstelle eine Bluetooth Low Energy-Schnittstelle. Auf diese Weise wird durch die Kommunikation mit dem Feldgerät auf Seiten des Feldgeräts nur ein minimaler zusätzlicher Energieverbrauch verursacht.

Dies ist beispielsweise bei Unterbrechungen der Versorgungsspannung wichtig, da Energiespeicher zur Überbrückung in Feldgeräten häufig zwecks Explosionsschutz auf geringe Energiemengen begrenzt sind.

Es ist in hohem Maße von den Gegebenheiten der jeweiligen Produktionsanlage abhängig, inwieweit der Fortgang der Produktion vom ständigen Funktionieren eines jeden Feldgeräts abhängt. Möglicherweise kann die Funktion eines Feldgeräts zumindest kurzfristig und zumindest teilweise von einem anderen Feldgerät wahrgenommen werden. Beispielsweise können zur Messung ein und derselben Größe zwei oder mehr voneinander unabhängige Messgeräte vorgesehen sein. Es kann auch beispielsweise eine Messgröße, die normalerweise mit einem ersten Feldgerät direkt gemessen wird, aus zwei Messgrößen, die mit einem zweiten bzw. dritten Feldgerät direkt gemessen werden, indirekt zumindest näherungsweise bestimmt werden. In diesem Fall kann beispielsweise die fehlende Funktion des ersten Feldgeräts zumindest für einen Zeithorizont, in dem die Näherung noch hinreichend genau ist, durch die Funktion des zweiten und dritten Feldgeräts kompensiert werden. Der kurzzeitige Ausfall des ersten Feldgeräts auf Grund einer Firmware-Aktualisierung muss dann gar nicht mehr zu einem Stillstand des Produktionsprozesses führen. Es gibt also einen Spielraum dafür, die Aktualisierung zumindest eines Teils der Feldgeräte in einer Produktionsanlage so zu koordinieren, dass hierdurch keine Ausfälle entstehen. Nur die Aktualisierung der restlichen Feldgeräte ist dann noch so zu koordinieren, dass sie möglichst gleichzeitig abläuft und die Ausfallzeit insgesamt minimiert wird.

Offenbart wird daher auch ein Verfahren zum Betreiben einer industriellen Produktionsanlage mit einer Vielzahl von Feldgeräten der beschriebenen Bauart. Das Verfahren ist jedoch nicht Teil der beanspruchten Erfindung.

Bei diesem Verfahren wird die Vielzahl von Feldgeräten so in eine erste Gruppe und in eine zweite Gruppe unterteilt, dass bei einem Ausfall der Feldgeräte der ersten Gruppe deren Funktion zumindest teilweise von den Feldgeräten der zweiten Gruppe übernommen werden kann.

Sodann werden die aktivierenden Bedingungen, und/oder die Übermittlung von Freigabesignalen, für die beiden Gruppen so abgestimmt, dass zuerst die Feldgeräte der ersten Gruppe zur Verwendung einer aktualisierten Version ihrer jeweiligen Firmware veranlasst werden und dass die Feldgeräte der zweiten Gruppe erst dann zur Verwendung einer aktualisierten Version ihrer jeweiligen Firmware veranlasst werden, wenn alle Feldgeräte der ersten Gruppe mit der aktualisierten Version ihrer jeweiligen Firmware arbeitsfähig sind.

Wie zuvor erläutert, wird hierdurch zum einen die Koordination des Updates für die restlichen Feldgeräte, auf deren ständiges Funktionieren es tatsächlich ankommt, erleichtert. Zum anderen wird ein Sicherheitsnetz geschaffen für den Fall, dass das die aktualisierte Version der Firmware nicht wie geplant funktioniert und die Feldgeräte der ersten Gruppe, die auf die Verwendung dieser Firmware umgeschaltet haben, ihre Funktion nicht mehr ausüben können. Da diese Funktion zumindest zeitweise durch die Feldgeräte der zweiten Gruppe ersetzt werden kann, steht ein gewisses Zeitfenster zur Verfügung, um Gegenmaßnahmen zu ergreifen, etwa durch ein Zurückrollen auf die vorherige Firmware.

Die Erfindung kann ganz oder teilweise in Software implementiert sein. Diese Software kann beispielsweise als Update oder Upgrade zu existierenden Feldgeräten oder Netzwerkgeräten vertrieben werden und stellt insofern ein eigenständiges Produkt dar. Daher bezieht sich die Erfindung auch auf ein Computerprogramm mit maschinenlesbaren Anweisungen, die, wenn sie auf einem Feldgerät, ausgeführt werden, das Feldgerät zu einem Feldgerät der beschriebenen Bauart aufwerten.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Feldgeräts 1;
Figur 2: Ausführungsbeispiel des Netzwerkgeräts 2;
Figur 3: Ausführungsbeispiel des Verfahrens 100;
Figur 4: Illustration des gleichzeitigen Updates am Beispiel zweier Feldgeräte 1.

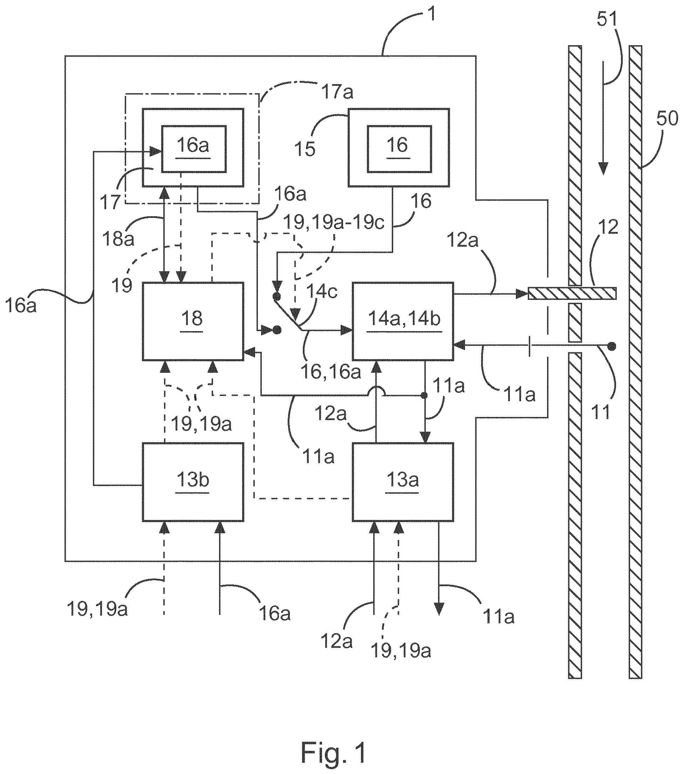

Figur 1 zeigt ein beispielhaftes Feldgerät 1. Das Feldgerät 1 ist dazu ausgebildet, einen Prozessdruck 51 in einem Rohr, das zugleich den industriellen Produktionsprozesses 50 symbolisiert, mit einem als Schieber eingezeichneten Aktor 12 zu steuern sowie diesen Druck 51 mit einem Sensor 11 auch zu messen. Der Aktor 12 wird von einem Mikrocontroller 14a bzw. Embedded-System 14b des Feldgeräts 1 mit Anweisungen 12a angesteuert, die über eine primäre Kommunikationsschnittstelle 13a empfangen wurden. Der Sensor 11 gibt über den Mikrocontroller 14a, bzw. das Embedded-System 14b, sowie anschließend über die primäre Kommunikationsschnittstelle 13a Messwerte 11a aus.

Der Mikrocontroller 14a, bzw. das Embedded-System 14b, arbeitet auf Basis einer im Programmspeicher 15 hinterlegten Firmware 16. Damit das Feldgerät 1 mit einer aktualisierten Version 16a der Firmware 16 arbeitet, muss diese zunächst in den weiteren Speicher 17 gelangen. Hierzu kann die aktualisierte Version 16a beispielsweise über eine weitere Kommunikationsschnittstelle 13b in den weiteren Speicher 17 eingelesen werden. Der weitere Speicher 17 mit der aktualisierten Version 16a kann aber auch beispielsweise in Form einer Speicherkarte in eine Aufnahme 17a des Feldgeräts 1 eingelegt werden. Prinzipiell kann die aktualisierte Version 16a auch über die primäre Kommunikationsschnittstelle 13a eingelesen werden; dieser Fall ist jedoch in Figur 1 nicht eingezeichnet.

Das Umschalten von der Verwendung der ursprünglichen Firmware 16 auf die aktualisierte Version 16a wird mit der Umschalteinrichtung 14c vorgenommen, die in Figur 1 als Schalter symbolisiert ist und von der Aktualisierungslogik 18 angesteuert wird. Die Aktualisierungslogik 18 ist über eine Verbindungsleitung 18a an den weiteren Speicher 17 gekoppelt und erhält so die Information, wann die aktualisierte Version 16a der Firmware 16 vollständig im weiteren Speicher 17 untergebracht ist. Sobald eine Aktivierungsbedingung 19, 19a-19c erfüllt ist, steuert die Aktualisierungslogik 18 die Umschalteinrichtung 14c an, so dass auf die Verwendung der aktualisierten Version 16a der Firmware 16 umgeschaltet wird.

Die Aktivierungsbedingung 19 kann der Aktualisierungslogik 18 in verschiedenster Weise zugeführt werden. In einem nicht beanspruchten Beispiel kann die Aktivierungsbedingung 19 beispielsweise schon in der aktualisierten Version 16a der Firmware 16 enthalten sein. Die Aktivierungsbedingung 19, sowie optional auch ein die Aktivierungsbedingung 19 erfüllendes Freigabesignal 19a, kann in einem anderen nicht beanspruchten Beispiel aber auch beispielsweise über eine der Kommunikationsschnittstellen 13a, 13b zugeführt werden und auf dieser Weise in die Aktualisierungslogik 18 gelangen. Erfindungsgemäß ist die Aktivierungsbedingung 19 eine von einem Messwert 11a des Sensors 11 abhängige Bedingung. Daher sollte die Aktualisierungslogik 18 auch den Messwert 11a als Eingabe erhalten.

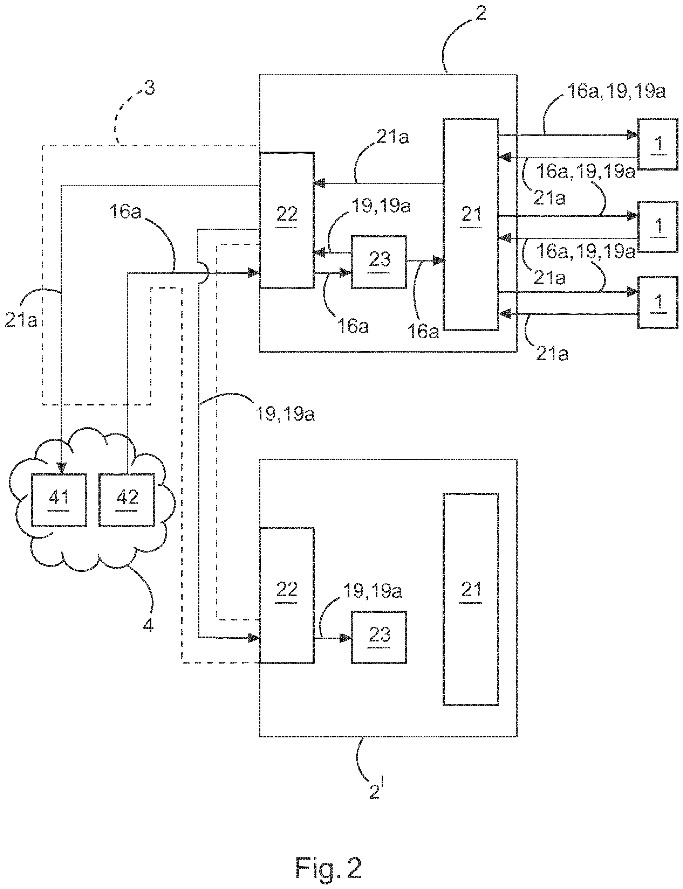

Figur 2 zeigt ein Ausführungsbeispiel des Netzwerkgeräts 2 im Zusammenspiel mit mehreren Feldgeräten 1 und einer Cloud 4. Das Netzwerkgerät 2 umfasst eine erste Kommunikationsschnittstelle 21 zur Verbindung mit den Feldgeräten 1. In der Richtung zu den Feldgeräten 1 werden neben der aktualisierten Version 16a der Firmware 16 auch Aktivierungsbedingungen 19 und Freigabesignale 19a verschickt. Umgekehrt werden von den Feldgeräten 21a Informationen, wie etwa Messwerte 11a oder auch Statusinformationen, bezogen.

Die von den Feldgeräten 1 bezogenen Informationen 21a werden über die zweite Kommunikationsschnittstelle 22 des Netzwerkgeräts 2 und über das Netzwerk 3 an eine Erfassungsstelle 41 in der Cloud 4 weitergereicht. Umgekehrt kann die aktualisierte Version 16a der Firmware 16 von einem Update-Server 42 in der Cloud über das Netzwerk 3 und die zweite Kommunikationsschnittstelle 22 in das Netzwerkgerät 2 eingelesen und dort der Rollout-Logik 23 zugeführt werden. Die Rollout-Logik 23 verwaltet die Aktivierungsbedingung 19 und ist auch dafür zuständig, die aktualisierte Version 16a der Firmware 16 über die erste Kommunikationsschnittstelle 21 an die Feldgeräte 1 weiterzureichen.

Es ist nicht in jeder Produktionsanlage möglich, alle vorhandenen Feldgeräte 1 mit nur einem Netzwerkgerät 2 abzudecken. Beispielsweise kann die erste Kommunikationsschnittstelle 21 des Netzwerkgeräts 2 eine Funkschnittstelle mit begrenzter Funkreichweite sein. Wenn nun zur Abdeckung weiterer, in Figur 2 nicht eingezeichneter Feldgeräte 1 ein weiteres Netzwerkgerät 2' zum Einsatz kommt, so kann die Rollout-Logik 23 des Netzwerkgeräts 2 vorteilhaft über dessen zweite Kommunikationsschnittstelle 22 und das Netzwerk 3 das weitere Netzwerkgerät 2' über aktivierende Bedingungen 19 und Freigabesignale 19a informieren. Auf diese Weise kann das Aktivieren der aktualisierten Version 16a der Firmware 16 noch großräumiger in der Produktionsanlage koordiniert werden.

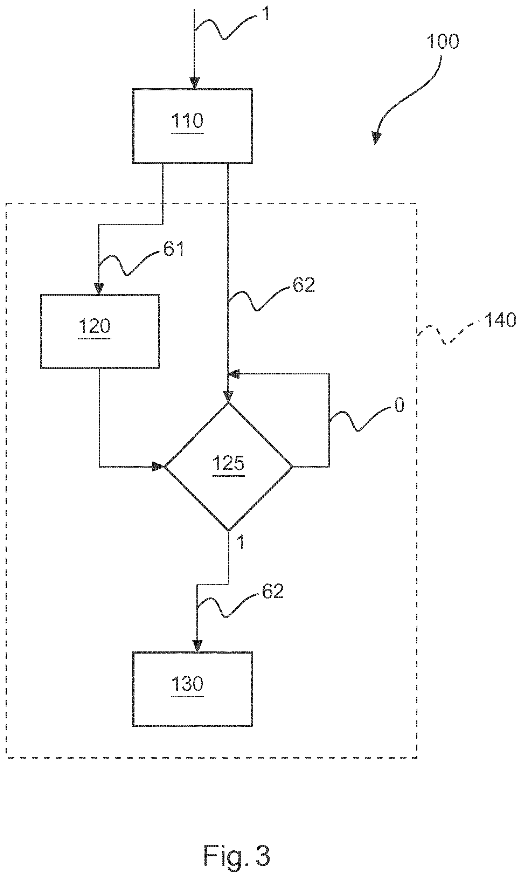

Figur 3 zeigt ein Ausführungsbeispiel des Verfahrens 100 zum Betreiben einer industriellen Produktionsanlage, die eine Vielzahl von Feldgeräten 1 umfasst. In Schritt 110 werden die Feldgeräte 1 zunächst in hier beispielhaft mit 61 und 62 bezeichnete Gruppen aufgeteilt. Die Gruppen 61 und 62 sind so zusammengestellt, dass bei einem Ausfall der Feldgeräte 1 der ersten Gruppe 61 deren Funktion zumindest teilweise von den Feldgeräten 1 der zweiten Gruppe übernommen werden kann.

Daher werden in Schritt 120 zunächst die Feldgeräte 1 der ersten Gruppe 61 dazu veranlasst, eine aktualisierte Version 16a ihrer jeweiligen Firmware 16 zu verwenden. In Schritt 125 wird geprüft, ob alle Feldgeräte 1 der ersten Gruppe 61 bereits mit ihrer jeweiligen aktualisierten Firmware 16a arbeitsfähig sind. Ist dies nicht der Fall (Wahrheitswert 0), so wird hierauf gewartet. Sind hingegen alle Feldgeräte 1 der ersten Gruppe 61 erfolgreich aktualisiert (Wahrheitswert 1), werden in Schritt 130 die Feldgeräte 1 der zweiten Gruppe 62 dazu veranlasst, eine aktualisierte Version 16a ihrer jeweiligen Firmware 16 zu verwenden. Die Abstimmung der Aktualisierung zwischen den Gruppen 61 und 62 insgesamt ist in Figur 3 mit dem Bezugszeichen 140 bezeichnet.

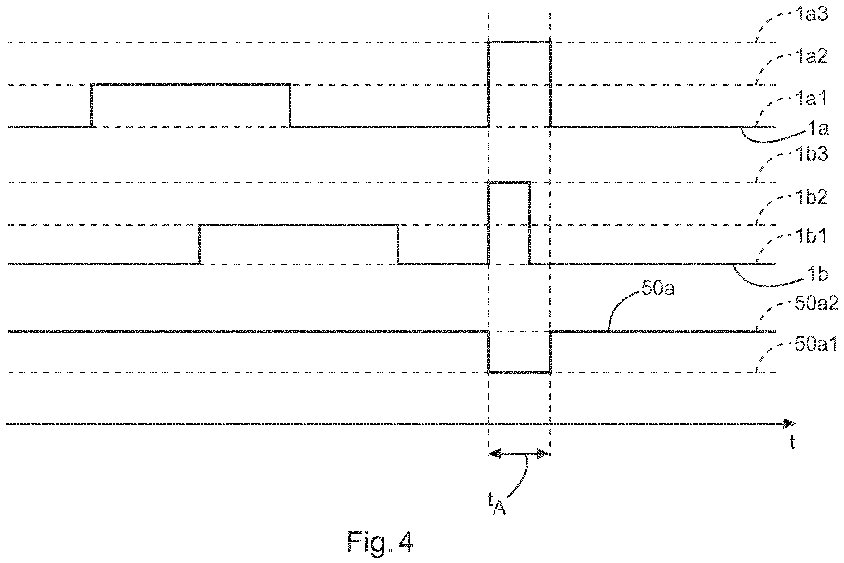

Figur 4 zeigt beispielhaft den Verlauf der Aktualisierung zweier Feldgeräte 1a und 1b in einer Produktionsanlage 50 über der Zeit t. Die Kurve 1a zeigt, wie der Betriebszustand des ersten Feldgeräts 1a zwischen dem Normalbetrieb 1a1, dem um den Empfang neuer Firmware 16a erweiterten Normalbetrieb 1a2 und der Aktivierung 1a3 der neuen Firmware 16a wechselt. Die Kurve 1b zeigt, wie der Betriebszustand des zweiten Feldgeräts 1b zwischen dem Normalbetrieb 1b1, dem um den Empfang neuer Firmware 16a erweiterten Normalbetrieb 1b2 und der Aktivierung 1b3 der neuen Firmware 16a wechselt. Die Kurve 50a zeigt, wie der Betriebszustand 50a des Produktionsprozesses 50 insgesamt zwischen dem Stillstand 50al und dem Normalbetrieb 50a2 wechselt.

Die beiden Feldgeräte 1a und 1b empfangen ihre jeweilige aktualisierte Firmware 16a in Zeiträumen, die sich teilweise überlappen. Währenddessen läuft die Produktionsanlage 50 als Ganzes jedoch noch im Normalbetrieb 50a2. Erst in dem Moment, in dem beide Feldgeräte 1a und 1b gleichzeitig zur Verwendung ihrer jeweils neuen Firmware 16a veranlasst werden, wechselt der Betriebszustand 50a der Produktionsanlage 50 in den Stillstand 50a1, bis beide Feldgeräte 1a und 1b fertig aktualisiert sind. Die Zeitdauer t_{A} des Stillstands 50al entspricht der Zeitdauer des längeren der beiden Aktualisierungsvorgänge. In dem in Figur 4 gezeigten Beispiel ist dies die Aktualisierung des ersten Feldgeräts 1a.

### Bezugszeichenliste

- 1: Feldgerät
- 1a, 1b: Feldgeräte, Betriebszustände
- 1a1: Normalbetrieb des Feldgeräts 1a
- 1a2: Normalbetrieb des Feldgeräts 1a mit Download neuer Firmware 16a
- 1a3: Aktivierung der neuen Firmware 16a auf Feldgerät 1a
- 1b1: Normalbetrieb des Feldgeräts 1b
- 1b2: Normalbetrieb des Feldgeräts 1b mit Download neuer Firmware 16a
- 1b3: Aktivierung der neuen Firmware 16a auf Feldgerät 1b
- 11: Sensor des Feldgeräts 1
- 11a: Messwert von Sensor 11
- 12: Aktor des Feldgeräts 1
- 12a: Anweisung für Beeinflussung des Aktors 12
- 13a: primäre Kommunikationsschnittstelle des Feldgeräts 1
- 13b: weitere Kommunikationsschnittstelle des Feldgeräts 1
- 14a: Mikrocontroller des Feldgeräts 1
- 14b: Embedded-System des Feldgeräts 1
- 14c: Umschalteinrichtung für Firmware 16 oder 16b
- 15: Programmspeicher Speicher des Feldgeräts 1
- 16: Firmware
- 16a: Aktualisierte Version der Firmware 16
- 17: weiterer Speicher des Feldgeräts 1
- 17a: Aufnahme für weiteren Speicher 17
- 18: Aktualisierungslogik des Feldgeräts 1
- 19: Aktivierungsbedingung für neue Firmware 16a
- 19a: Freigabesignal
- 19b: vorgegebener Zeitpunkt für Aktivierung
- 19c: von Messwert 11a abhängige Bedingung
- 2,2': Netzwerkgerät
- 21: erste Kommunikationsschnittstelle des Netzwerkgeräts 2, 2'
- 21a: von Feldgerät 1 bezogene Informationen
- 22: zweite Kommunikationsschnittstelle des Netzwerkgeräts 2, 2'
- 23: Rollout-Logik des Netzwerkgeräts 2, 2'
- 3: Netzwerk
- 4: Cloud
- 41: Erfassungsstelle in Cloud 4
- 42: Update-Server in Cloud 4
- 50: Produktionsprozess, Produktionsanlage
- 50a: Betriebszustand des Prozesses / der Anlage 50
- 50al: Stillstand als Betriebszustand 50a
- 50a2: Normalbetrieb als Betriebszustand 50a
- 51: Prozessgröße in Prozess oder Anlage 50
- 61, 62: Gruppen von Feldgeräten 1
- 100: Verfahren
- 110: Aufteilen der Feldgeräte 1 in Gruppen 61, 62
- 120: Aktualisieren der Feldgeräte 1 der Gruppe 61
- 125: Prüfung, ob alle Feldgeräte 1 der Gruppe 61 aktualisiert
- 130: Aktualisieren der Feldgeräte 1 der Gruppe 62
- 140: Koordination des Updates zwischen Gruppen 61 und 62

## Patentansprüche

1. Feldgerät (1, 1a, 1b) zur Messung mindestens einer Prozessgröße (51) in einem industriellen Produktionsprozess (50), umfassend
• mindestens einen Sensor (11) zur Messung der Prozessgröße (51),
• mindestens eine primäre Kommunikationsschnittstelle (13a), die zur Übermittlung von Messwerten (11a) des Sensors (12) ausgebildet ist,
• mindestens einen Mikrocontroller (14a) oder ein Embedded-System (14b) zur Steuerung der Messwertaufnahme mit dem Sensor (12) auf der Basis einer in einem Programmspeicher (15) hinterlegten Firmware (16),
• einen weiteren Speicher (17) für eine aktualisierte Version (16a) der Firmware (16), und/oder eine Aufnahme (17a) für einen solchen weiteren Speicher (17), sowie
• eine Aktualisierungslogik (18), die dazu ausgebildet ist, nach Aufnahme der aktualisierten Version (16a) der Firmware (16) in den weiteren Speicher (17) und nach späterem Eintreten mindestens einer vom Verwender des Feldgeräts (1, la, 1b) festgelegten Aktivierungsbedingung (19) den Mikrocontroller (14a), bzw. das Embedded-System (14b), zur Verwendung der aktualisierten Version (16a) der Firmware (16) zu veranlassen,
**dadurch gekennzeichnet, dass** die Aktualisierungslogik (18) dazu ausgebildet ist, eine vom Messwert (11a) des Sensors (11) abhängige Bedingung (19c) als Aktivierungsbedingung (19) zu prüfen.

2. Feldgerät (1, la, 1b) nach Anspruch 1, wobei das Feldgerät (1, la, 1b) dazu ausgebildet ist, die aktualisierte Version (16a) der Firmware (16) über eine Kommunikationsschnittstelle (13b), die von der primären Kommunikationsschnittstelle (13a) verschieden ist (13a), in den weiteren Speicher (17) einzulesen.

3. Feldgerät (1, la, 1b) nach Anspruch 2, wobei die Kommunikationsschnittstelle (13b) zum Empfang der Firmware eine geringere Übertragungsgeschwindigkeit als die primäre Kommunikationsschnittstelle (13a) aufweist.

4. Feldgerät (1, la, 1b) nach einem der Ansprüche 1 bis 3, ausgeführt als Füllstandmessgerät, Grenzstandmessgerät, Dichtemessgerät, Durchflussmessgerät oder Druckmessgerät.

5. Computerprogramm, enthaltend maschinenlesbare Anweisungen, die, wenn sie auf einem Feldgerät (1, la, 1b) ausgeführt werden, das Feldgerät (1, la, 1b) zu einem Feldgerät (1, la, 1b) nach einem der Ansprüche 1 bis 3 aufwerten.

## Claims

1. A field device (1, 1a, 1b) for measuring at least one process quantity (51) in an industrial production process (50), comprising
• at least one sensor (11) for measuring the process quantity (51),
• at least one primary communication interface (13a) that is configured for transmitting measurement values (11a) of the sensor (11),
• at least one microcontroller (14a) or an embedded system (14b) for controlling the recording of measurement values with the sensor (11), based on a firmware (16) stored in a program memory (15),
• a further memory (17) for an updated version (16a) of the firmware (16), and/or a receptacle (17a) for such a further memory (17), as well as
• an updating logic (18) that is configured to: after receiving the updated version (16a) of the firmware (16) into the further memory (17) and a later meeting of at least one activation condition (19) set by the user of the field device (1, 1a, 1b), cause the microcontroller (14a), respectively the embedded system (14b), to use the updated version (16a) of the firmware,
**characterized in that** the updating logic is configured to check a condition (19c) that is dependent on a measurement value (11a) of the sensor (11) as activation condition.

2. The field device (1, 1a, 1b) of claim 1, wherein the field device (1, 1a, 1b) is configured to read the updated version (16a) of the firmware (16) into the further memory (17) via a communication interface (13b) that is different from the primary communication interface (13a).

3. The field device (1, 1a, 1b) of claim 2, wherein the communication interface (13b) for receiving the firmware has a lower rate of transmission than the primary communication interface (13a).

4. The field device (1, 1a, 1b) of any one of claims 1 to 3, configured as a filling-level measuring device, a level-limit measuring device, a density measuring device, a flow measuring device or a pressure measuring device.

5. A computer program, comprising machine-readable instructions that, when executed on a field device (1, 1a, 1b), upgrade the field device (1, 1a, 1b) to a field device (1, 1a, 1b) of any one of claims 1 to 3.

## Revendications

1. Appareil de terrain (1, la, 1b) pour mesurer au moins une grandeur de processus (51) dans un processus de production industriel (50), comprenant :
- au moins un capteur (11) pour mesurer la grandeur de processus (51),
- au moins une interface de communication primaire (13a) qui est conçue pour transmettre des valeurs de mesure (11a) du capteur (11),
- au moins un microcontrôleur (14a) ou un système intégré (14b) pour commander la prise de valeurs de mesure avec le capteur (11) sur la base d'un micrologiciel (16) mémorisé dans une mémoire de programme (15),
- une autre mémoire (17) pour une version actualisée (16a) du micrologiciel (16) et/ou un logement (17a) pour une telle autre mémoire (17), ainsi que
- une logique d'actualisation (18) qui est conçue pour, après la réception de la version actualisée (16a) du micrologiciel (16) dans l'autre mémoire (17) et après la survenue ultérieure d'au moins une condition d'activation (19) définie par l'utilisateur de l'appareil de terrain (1, la, 1b), amener le microcontrôleur (14a) ou le système intégré (14b) à utiliser la version actualisée (16a) du micrologiciel (16) ,
**caractérisé en ce que** la logique d'actualisation (18) est conçue pour vérifier une condition (19c) dépendant de la valeur de mesure (11a) du capteur (11) comme condition d'activation (19).

2. Appareil de terrain (1, la, 1b) selon la revendication 1, dans lequel l'appareil de terrain (1, la, 1b) est configuré pour stocker la version actualisée (16a) du micrologiciel (16) dans l'autre mémoire (17) par l'intermédiaire d'une interface de communication (13b) qui est différente (13a) de l'interface de communication primaire (13a).

3. Appareil de terrain (1, la, 1b) selon la revendication 2, dans lequel l'interface de communication (13b) pour recevoir le micrologiciel présente une vitesse de transmission inférieure par rapport à l'interface de communication primaire (13a).

4. Appareil de terrain (1, la, 1b) selon l'une des revendications 1 à 3, réalisé sous la forme d'un appareil de mesure de niveau de remplissage, d'un appareil de mesure de niveau limite, d'un appareil de mesure de densité, d'un appareil de mesure de débit ou d'un appareil de mesure de pression.

5. Programme d'ordinateur comprenant des instructions lisibles par machine qui, lorsqu'elles sont exécutées sur un appareil de terrain (1, la, 1b), revalorisent l'appareil de terrain (1, la, 1b) en un appareil de terrain (1, la, 1b) selon l'une des revendications 1 à 3.
